# EUROPÄISCHE PATENTSCHRIFT

(11) **EP 1 805 476 B1**
(45) Veröffentlichungstag und Bekanntmachung des Hinweises auf die Patenterteilung: **09.01.2013**
(21) Anmeldenummer: 05763993.2
(22) Anmeldetag: 22.07.2005
(51) Int. Cl.: G01B 9/02, G01B 11/06, G01N 21/95

(54) **INTERFEROMETER MIT EINER SPIEGELANORDNUNG ZUR VERMESSUNG EINES MESSOBJEKTES**
INTERFEROMETER COMPRISING A MIRROR ASSEMBLY FOR MEASURING AN OBJECT TO BE MEASURED
INTERFEROMETRE COMPRENANT UN SYSTEME DE MIROIRS POUR EFFECTUER DES MESURES SUR UN OBJET

(30) Priorität: 22.09.2004 DE 102004045806
(43) Veröffentlichungstag der Anmeldung: 11.07.2007
(73) Patentinhaber: ROBERT BOSCH GMBH, 70442 Stuttgart (DE)
(72) Erfinder: STRÄHLE, Jochen, 71287 Weissach (DE)
(86) Internationale Anmeldenummer: PCT/EP2005/053573
(87) Internationale Veröffentlichungsnummer: WO 2006/032560

(56) Entgegenhaltungen:
- US-B1- 6 504 615
- "INTERFEROMETER MEASURES BOTH SIDES OF DISK" LASER FOCUS WORLD, PENNWELL PUB., TULSA, OK, US, September 1997 (1997-09), Seiten 52-53, XP001182916 ISSN: 1043-8092

## Beschreibung

### Stand der Technik

Die Erfindung betrifft eine interferometrische Messvorrichtung mit einer Spiegelanordnung zur Vermessung eines Messobjektes, insbesondere zur Dickenmessung des Messobjektes.

Interferometrische Systeme eignen sich unter anderem für berührungslose Untersuchungen von Oberflächen verschiedener Messobjekte. Zur Erfassung der Oberflächenkontur eines zu untersuchenden Objektes trifft ein Objektstrahl aus einer Lichtquelle des Interferometers die Oberfläche an dem zu messenden Bereich. Der von der Oberfläche reflektierte Objektstrahl wird einem Detektor des Interferometers zugeführt und bildet zusammen mit einem Referenzstrahl ein Interferenzmuster, aus dem sich die Weglängendifferenz der beiden Strahlen ableiten lässt. Diese gemessene Weglängendifferenz der beiden Strahlen entspricht der Topographieänderung der Oberfläche.

Insbesondere mit einem Weisslichtinterferometer, bei dem die Lichtquelle eine kurzkohärente Strahlung abgibt, ist es auch möglich, das Messobjekt mittels Tiefenabtastung abzuscannen. Wie beispielsweise in erläutert, wird dabei die EP 16 34 035 kurzkohärente Strahlung über einen Strahlteiler in einen Objektstrahl und in einen Referenzstrahl aufgeteilt. Die zu vermessende Objektoberfläche wird über ein Objektiv auf einen Bildaufnehmer, beispielsweise auf eine CCD-Kamera ("chargecoupled device"-Kamera), abgebildet und von der durch den Referenzstrahl gebildeten Referenzwelle überlagert. Die Tiefenabtastung kann durch Bewegen eines den Referenzstahl reflektierenden Referenzspiegels oder des Objektivs relativ zu der Messvorrichtung durchgeführt werden. Beim Bewegen des Objektes sind Bildebene des Objektes und Referenzebene in derselben Ebene. Während der Tiefenabtastung bleibt das Objekt starr im Gesichtsfeld der CCD-Kamera, und das Objekt wird nur in der Tiefenachse relativ zur Referenzebene bewegt. Auf diese Weise können Messungen technischer Oberflächen mit einer Tiefenauflösung im Bereich weniger Nanometer vermessen werden. Technische Grundlagen zu diesem Messverfahren findet man auch im Beitrag "Three-dimensional sensing of rough surfaces by coherence radar" (T. Dresel, G. Häusler, H. Venzke, Appl. Opt. 31 (7), p. 919-925, 1992).

Oft ist es wünschenswert nicht nur eine Seite des Messobjektes abzubilden. In der Praxis wird beispielsweise zur Bestimmung der Dicke eines Messobjektes, etwa der Dicke einer Scheibe, durch eine Spiegelanordnung in einem Spezialobjektiv beide Seiten der Scheibe mit Objektstrahlen vermessen. Dazu werden durch zwei Ablenkspiegeln die Objektstrahlen senkrecht auf die beiden Seiten der Scheibe gelenkt. Die von den Seiten der Scheibe reflektierten Strahlen werden dem Bildaufnehmer zugeführt und zusammen mit den Referenzstrahlen zur Aufzeichnung der so genannten Korrelogramme herangezogen und schließlich zur Gewinnung der Höhendaten ausgewertet. Wie bereits oben erläutert, wird während der Messung ein Tiefenscan durchgeführt, oder mit anderen Worten, die zu vermessenden Seiten des Messobjektes werden durch die Fokusebene der Kamera gefahren. Alternativ ist es auch möglich, die Fokusebene der Kamera durch elektrisch steuerbare Linsen oder Linsensysteme zu ändern.

Aus "Interferometer measures both sides of disk", Laser Focus World, Sept.1997, Seiten 52,53 ist ein Interferometer bekannt, wobei das Messobjekt über zwei Ablenkspiegel von zwei Seiten beleuchtet wird.

Ein Nachteil der beschriebenen Spiegelanordnung ist es jedoch, dass die relative Position des Messobjektes in Bezug auf die beiden Ablenkspiegeln nicht kontrollierbar ist. Eine optimale Positionierung des Messobjektes ist dann gegeben, wenn die beiden Strahlen, die auf die erste bzw. zweite Seite des Messobjektes gerichtet und von dort reflektiert dem Bildaufnehmer zugeführt werden, dabei einen gleich langen Lichtweg zurücklegen. Dazu muss das Messobjekt genau in der Mitte zwischen den beiden Ablenkspiegeln positioniert werden. Ist das Messobjekt aufgrund fehlender Kontrollmöglichkeit versetzt positioniert, d. h. die Lichtwege der beiden Strahlen sind unterschiedlich lang, dann resultiert daraus eine längere Messdauer im Vergleich zu einer optimalen Positionierung.

Bei einer Fehlpositionierung von etwa 20 µm des Messobjektes muss ein zusätzlicher Scanweg von 2 x 20 µm = 40 µm durchfahren werden. Eine typische Messgeschwindigkeit bei scannenden Interferometern liegt bei etwa 5 µm/sec. Daraus resultiert eine zusätzliche Messzeit von 8 Sekunden. Diese Zeitgröße ist bei Prüfungen aller Messobjekte mit Taktzeiten von wenigen Sekunden gerade in der industriellen Fertigung nicht akzeptabel.

### Vorteile der Erfindung

Die erfindungsgemäße interferometrische Messvorrichtung mit den in Anspruch 1 angegebenen Merkmalen hat gegenüber dem Stand der Technik den Vorteil, dass eine Überprüfung der relativen Position des Messobjektes gegenüber den Ablenkspiegeln ermöglicht wird. Dadurch kann in einem nächsten Schritt die relative Positionierung der relevanten Komponenten optimiert werden, wodurch eine schnellere Messung erzielt wird. Die Messdauer verkürzt sich signifikant. Vorteilhafterweise kann dennoch auf einen zweiten Bildaufnehmer verzichtet werden.

Vorteilhafte Weiterbildungen der interferometrischen Messvorrichtung sind in den abhängigen Ansprüchen angegeben und in der Beschreibung beschrieben.

### Zeichnung

Ausführungsbeispiele der Erfindung werden anhand der Zeichnung und der nachfolgenden Beschreibung näher erläutert. Es zeigen:
Figur 1 eine Anordnung der optischen Komponenten eines Interferometers im Draufsicht,
Figur 2 eine Anordnung der optischen Komponenten eines Spezialobjektivs im Draufsicht,
Figur 3 eine Spiegelanordnung im Spezialobjektiv nach dem Stand der Technik in perspektivischer Sicht,
Figur 4 eine erfindungsgemäße Spiegelanordnung im Spezialobjektiv in perspektivischer Sicht,
Figur 5 im Bildaufnehmer aufgenommene Bilder des Messobjektes aus unterschiedlichen Seiten bei einer nicht optimalen Positionierung, und
Figur 6 im Bildaufnehmer aufgenommene Bilder des Messobjektes aus unterschiedlichen Seiten bei einer optimalen Positionierung.

### Beschreibung der Ausführungsbeispiele

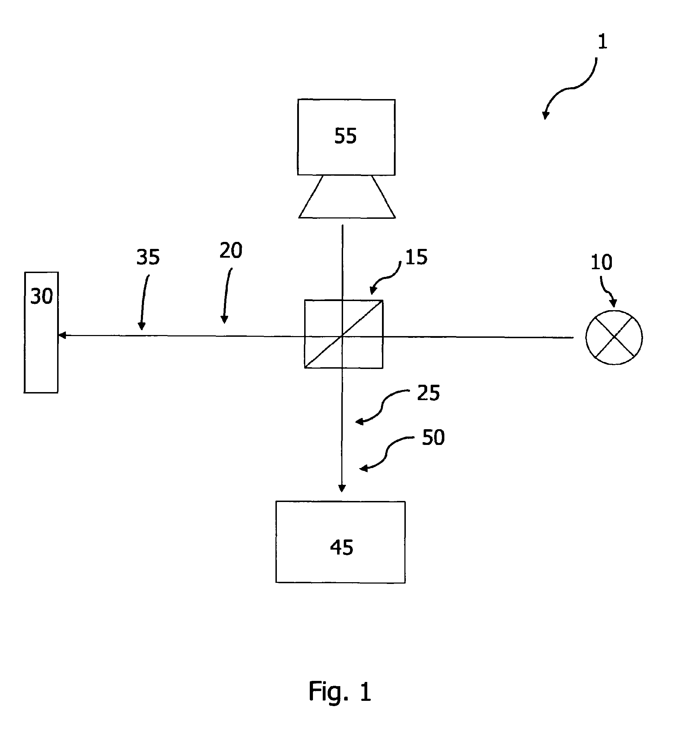

Einen grundsätzlichen Aufbau mit den optischen Komponenten einer interferometrischen Messvorrichtung 1 nach Michelson zeigt Figur 1 in Draufsicht. Hier wird als Messmethode die Weisslichtinterferometrie (Kurzkohärenzinterferometrie) angewandt, weshalb die Lichtquelle 10 eine kurzkohärente Strahlung aussendet. Das Licht wird über einen Strahlteiler 15 in einen Referenzstrahl 20 und in einen Objektstrahl 25 geteilt. Der Referenzstrahl 20 wird weiter von einem im Referenzlichtweg 35 angeordneten Referenzspiegel 30 reflektiert und gelangt wieder über den Strahlteiler 15 in einen Bildaufnehmer 55. Dort werden die Lichtwellen der Referenzstrahlen 20 überlagert mit den Lichtwellen der Objektstrahlen 25, die ihrerseits über ein im Objektlichtweg 50 angeordneten Spezialobjektiv 45 auf ein Messobjekt 5 gelenkt und von ihm reflektiert wurden.

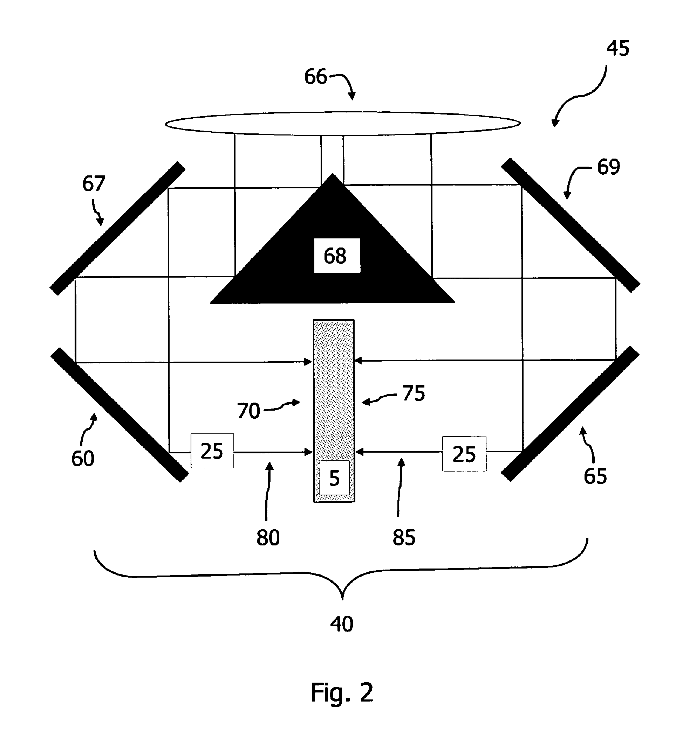

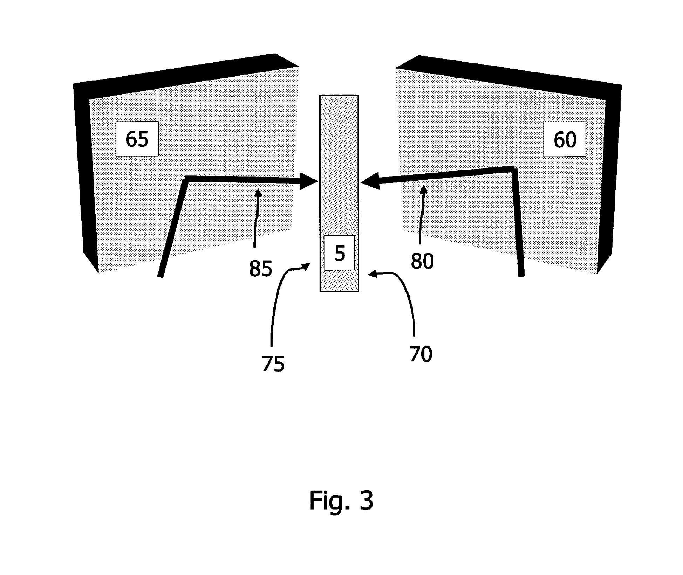

Das in Figur 2 in seinen Komponenten dargestellte Spezialobjektiv 45 sorgt mit seiner Spiegelanordnung 40 für eine Bestrahlung und damit eine Abbildung des Messobjektes 5 aus zwei entgegengesetzten Richtungen. Dadurch kann beispielsweise die Dicke eines Messobjektes 5, etwa die Dicke einer Scheibe, bestimmt werden. Die Spiegelanordnung 40 des Spezialobjektes 45 weist mindestens einen ersten 60 und einen zweiten Ablenkspiegel 65 auf, wobei diese derart angeordnet sind, dass die auf den ersten 60 bzw. auf den zweiten Ablenkspiegel 65 einfallenden Objektstrahlen 25 auf eine erste 70 bzw. dazu parallele zweite Seite 75 des zu messenden Messobjektes 5 in einem ersten 80 bzw. zweiten, zueinander antiparallelen Strahlengängen 85 gerichtet werden. Typischerweise fallen die Objektstrahlen 25 senkrecht auf die erste 70 bzw. zweite Seite 75 der Scheibe. Figur 3 zeigt zur Verdeutlichung die Anordnung der beiden Ablenkspiegeln 60, 65 mit der zu messenden Scheibe in perspektivischer Sicht. Das Spezialobjektiv 45 bzw. die Spiegelanordnung 40 kann zwar noch weitere optische Komponenten aufweisen wie eine Linse 66, ein Prisma 68 oder weitere Spiegelelemente 67, 69, die die Objektstrahlen 25 aufteilen und in zweckmäßigerweise Weise auf die beiden Ablenkspiegeln 60, 65 richten, jedoch ist mit diesen Prisma- 68 und Spiegelelementen 67, 69 nicht möglich, die relative Position der Scheibe gegenüber den Ablenkspiegeln 60, 65 zu überprüfen. Die bisher beschriebene Ausführung der Messvorrichtung ist aus der Praxis bekannt.

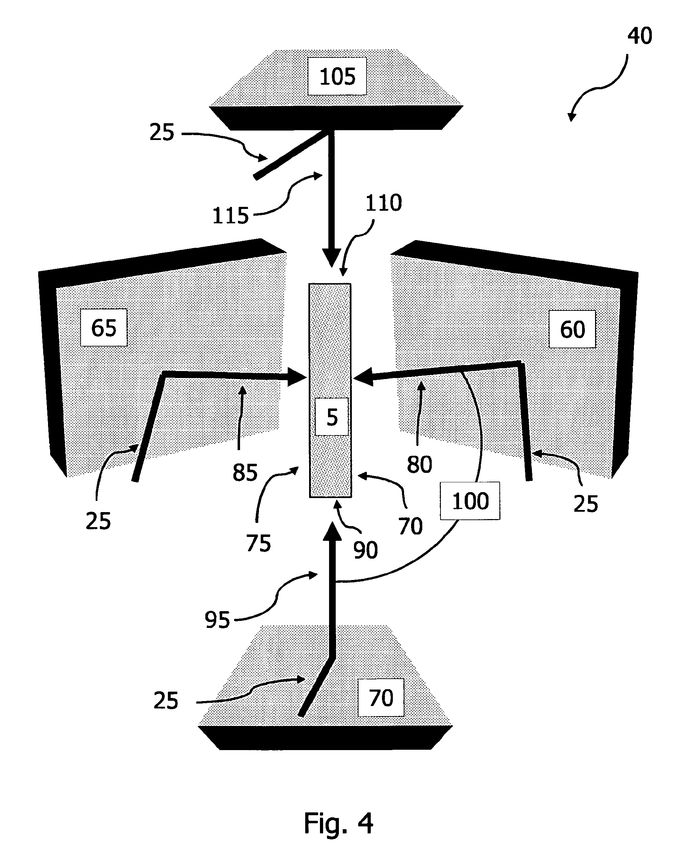

Erfindungsgemäß ist nun vorgesehen, dass die Spiegelanordnung 40 wie in Figur 4 in perspektivischer Sicht dargestellt, zusätzlich mindestens einen ersten Positionsspiegel 70 zur Abbildung der Position des zu messenden Messobjektes 5 relativ zum ersten 60 und/oder zweiten Ablenkspiegel 65 aufweist. Bevorzugt ist der erste Positionsspiegel 70 so angeordnet ist, dass die auf den Positionsspiegel 70 einfallenden Objektstrahlen 25 auf eine zur ersten 70 und zweiten Seite 75 im rechten Winkel stehenden dritten Seite 90 des zu messenden Messobjektes 5 in einem dritten Strahlengang 95 gerichtet werden. Die dritte Seite 90 des zu messenden Messobjektes 5 ist beispielsweise die dünne Kantenseite einer Scheibe. Dabei schließen die antiparallelen Strahlengänge 80, 85 vom ersten und zweiten Ablenkspiegeln 60, 65 mit dem dritten Strahlengang 95 einen Winkel 100 größer 0° und kleiner 180° ein, d. h. die Richtungen der antiparallelen Strahlengänge 80, 85 und des dritten Strahlengangs 95 sind weder parallel noch antiparallel. Bevorzugt beträgt der Winkel 100 genau 90°, d. h. es liegt ein rechter Winkel vor.

Weiter kann die Spiegelanordnung 40 einen zweiten Positionsspiegel 105 aufweisen, welcher so angeordnet ist, dass die auf den zweiten Positionsspiegel 105 einfallenden Objektstrahlen 25 auf eine zur dritten 90 parallele, vierte Seite 110 des zu messenden Messobjektes 5 in einem vierten Strahlengang 115 gerichtet werden. Bevorzugt verläuft der vierte Strahlengang 115 genau antiparallel zum dritten Strahlengang 90.

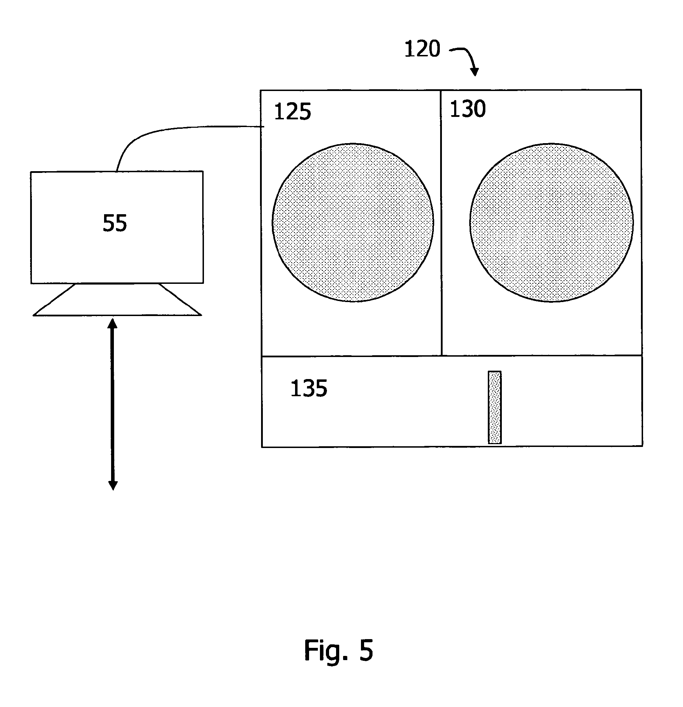

Die Objektstrahlen 25 im ersten 80, im zweiten 85, im dritten 90 und wahlweise im vierten Strahlengang 115 treffen von vier Richtungen auf vier verschiedene Seiten 70, 75, 90, 110 des Messobjektes 5 auf und werden von dort reflektiert und dem Bildaufnehmer 55 zugeführt. Diese eintreffenden Objektstrahlen 25 werden jeweils mit den zuvor beschriebenen Referenzstrahlen 20 überlagert. Der Bildaufnehmer 55 ist beispielsweise eine Kamera, insbesondere eine CCD- oder CMOS-Kamera ("complementary metal oxide semiconductor"-Kamera), die wie in Figur 5 dargestellt mit einem Bildausgabe-Gerät 120 verbunden ist. Durch das Bildausgabe-Gerät 120 können so Aufnahmen vom Messobjekt 5 aus unterschiedlichen Blickrichtungen dargestellt werden. Im ersten Bildausschnitt 125 ist die Aufnahme der ersten Seite 70 des Messobjektes 5 zu sehen, während im zweiten Bildausschnitt 130 die Aufnahme der zweiten Seite 75 des Messobjektes 5 dargestellt ist. Zusätzlich ist ein dritter Bildausschnitt 135 vorgesehen, bei dem die dritte Seite 90 des Messobjektes 5 zu beobachten ist. Mit dem dritten Bildausschnitt 135 kann die relative Position des Messobjektes 5 gegenüber den beiden Ablenkspiegeln 60, 65 überprüft werden. In Figur 5 ist der Fall einer nicht optimalen Positionierung zu sehen. Eine genaue Bestimmung der relativen Positionierung des Messobjektes 5 wird durch den Bildaufnehmer 55 durchgeführt, da bevorzugterweise der Bildaufnehmer 55 eine Kamera mit einer Auswertesoftware zur Positionsbestimmung des Messobjektes 5 ist.

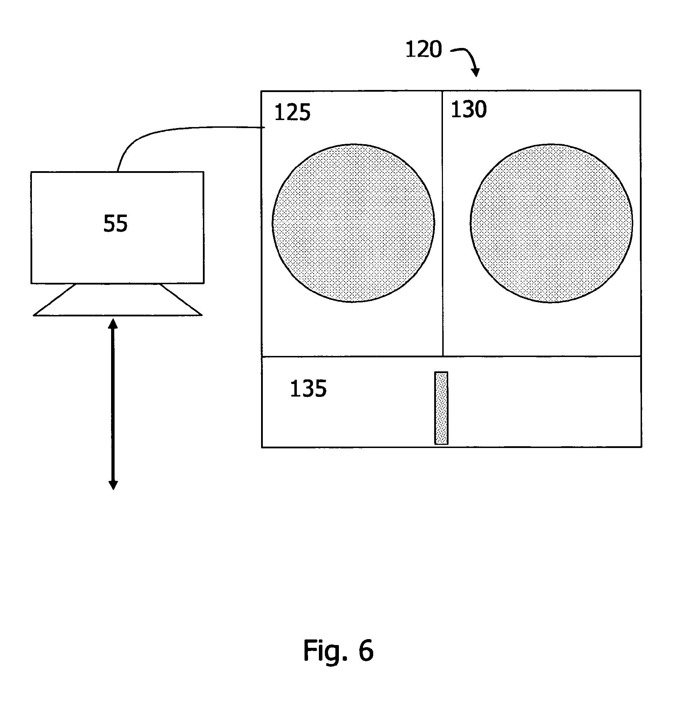

Mit der Positionsbestimmung des Messobjektes 5 kann nun eine Positionskorrektur durchgeführt werden. Grundsätzlich ist der optische Weg zwischen dem Messobjekt 5 und dem Bildaufnehmer 55 anzupassen, d. h. das Messobjekt 5 wird relativ zum optischen System verschoben. Idealerweise weist die Messvorrichtung 1 selbst eine Korrektureinheit zur Anpassung des optischen Weges zwischen dem Messobjekt 5 und dem Bildaufnehmer 55 auf. Die Korrektureinheit kann dabei aus mindestens einem Verfahrtisch, Piezoelement, optisch aktiven Element oder aus ihrer Kombination bestehen. Wie aus Figur 6 erkennbar, kann nach einer automatischen, erfolgreichen Positionskorrektur auf dem dritten Bildausschnitt 135 des Bildausgabe-Geräts 120 die entsprechende Position des Messobjektes 5 festgestellt werden. Im übrigen kann die Position des Messobjektes 5 vollständig, teilweise oder verzerrt mit den Ablenkspiegeln 60, 65 abgebildet werden. So reicht es beispielsweise aus, wenn nur der Abstand zwischen der ersten Seite 70 des Messobjektes 5 und dem ersten Ablenkspiegel 60 abgebildet wird, da der Abstand zwischen den beiden Ablenkspiegeln 60, 65 bekannt ist. Gleichzeitig ist bei einer optimalen Positionierung des Messobjektes 5 beide Seiten 70, 75 des Messobjektes 5 scharf im ersten 125 und im zweiten Bildausschnitt 130 abgebildet. Das eigentliche Abscannen des Messobjektes 5 kann nun durchgeführt werden. Die durch die Erfindung erzielte Verkürzung der Messzeit wurde in der Praxis bestätigt.

## Patentansprüche

1. Interferometrische Messvorrichtung (1) zur Vermessung eines Messobjektes (5), insbesondere zur Dickenmessung des Messobjektes (5), mit einer Lichtquelle (10), einem Strahlteiler (15) zum Bilden von Referenzstrahlen (20) und Objektstrahlen (25), einem Referenzspiegel (30) im Referenzlichtweg (35), einem eine Spiegelanordnung (40) aufweisenden Spezialobjektiv (45) im Objektlichtweg (50) und einem Bildaufnehmer (55), wobei die Spiegelanordnung (40) aus mindestens einem ersten (60) und einem zweiten Ablenkspiegel (65) besteht und diese derart angeordnet sind, dass im Gebrauch die auf den ersten (60) bzw. auf den zweiten Ablenkspiegel (65) einfallenden Objektstrahlen (25) auf eine erste (70) bzw. dazu parallele zweite Seite (75) des zu messenden Messobjektes (5) in einem ersten (80) bzw. zweiten zueinander antiparallelen Strahlengängen (85) gerichtet werden,
**dadurch gekennzeichnet,**
**dass** die Spiegelanordnung (40) zusätzlich mindestens einen ersten Positionsspiegel (70) zur Abbildung der Position des zu messenden Messobjektes (5) relativ zum ersten (60) und/oder zweiten Ablenkspiegel (65) aufweist.

2. Interferometrische Messvorrichtung (1) nach Anspruch 1,
**dadurch gekennzeichnet,**
**dass** der erste Positionsspiegel (70) so angeordnet ist, dass die auf den Positionsspiegel (70) einfallenden Objektstrahlen (25) auf eine zur ersten (70) und zweiten Seite (75) im rechten Winkel stehenden dritten Seite (90) des zu messenden Messobjektes (5) in einem dritten Strahlengang (95) gerichtet werden.

3. Interferometrische Messvorrichtung (1) nach Anspruch 2,
**dadurch gekennzeichnet,**
**dass** die antiparallelen Strahlengänge (80, 85) mit dem dritten Strahlengang (95) einen Winkel (100) größer 0° und kleiner 180° einschließen.

4. Interferometrische Messvorrichtung (1) nach Anspruch 3,
**dadurch gekennzeichnet,**
**dass** der Winkel (100) ein rechter Winkel ist.

5. Interferometrische Messvorrichtung (1) nach einem der Ansprüche 2 bis 4,
**dadurch gekennzeichnet,**
**dass** die Spiegelanordnung (40) einen zweiten Positionsspiegel (105) aufweist und dieser so angeordnet ist, dass die auf den zweiten Positionsspiegel (105) einfallenden Objektstrahlen (25) auf eine zur dritten (90) parallele, vierte Seite (110) des zu messenden Messobjektes (5) in einem vierten Strahlengang (115) gerichtet werden.

6. Interferometrische Messvorrichtung (1) nach einem der Ansprüche 1 bis 5,
**dadurch gekennzeichnet,**
**dass** der Bildaufnehmer (55) eine Kamera mit einer Auswertesoftware zur Positionsbestimmung des Messobjektes (5) ist.

7. Interferometrische Messvorrichtung (1) nach einem der Ansprüche 1 bis 6,
**dadurch gekennzeichnet,**
**dass** die Messvorrichtung (1) eine Korrektureinheit zur Anpassung des optischen Weges zwischen dem Messobjekt (5) und dem Bildaufnehmer (55) aufweist.

8. Interferometrische Messvorrichtung (1) nach Anspruch 7,
**dadurch gekennzeichnet,**
**dass** die Korrektureinheit aus mindestens einem Verfahrtisch, Piezoelement, optisch aktiven Element oder aus ihrer Kombination besteht.

## Claims

1. Interferometric measurement apparatus (1) for measuring a measurement object (5), in particular for measuring the thickness of the measurement object (5), having a light source (10), a beam splitter (15) for forming reference beams (20) and object beams (25), a reference mirror (30) in the reference light path (35), a special objective (45), having a mirror arrangement (40), in the object light path (50), and an image recorder (55), wherein the mirror arrangement (40) consists of at least a first deflection mirror (60) and a second deflection mirror (65) and said mirrors are arranged such that, in use, the object beams (25) incident on the first deflection mirror (60) and, respectively, on the second deflection mirror (65) are directed in a first beam path (80) and, respectively, in a second beam path (85) in each case onto a first side (70) of the measurement object (5) to be measured and onto a second side (75) thereof, which is parallel to the first side (70), with the first and second beam paths being antiparallel with respect to each other, **characterized in that** the mirror arrangement (40) additionally has at least one first position mirror (70) for imaging the position of the measurement object (5) to be measured relative to the first deflection mirror (60) and/or the second deflection mirror (65).

2. Interferometric measurement apparatus (1) according to Claim 1, **characterized in that** the first position mirror (70) is arranged such that the object beams (25) incident on the position mirror (70) are directed in a third beam path (95) onto a third side (90) of the measurement object (5) to be measured, which is at a right angle to the first side (70) and the second side (75).

3. Interferometric measurement apparatus (1) according to Claim 2, **characterized in that** the antiparallel beam paths (80, 85) enclose an angle (100) of more than 0° and less than 180° with the third beam path (95).

4. Interferometric measurement apparatus (1) according to Claim 3, **characterized in that** the angle (100) is a right angle.

5. Interferometric measurement apparatus (1) according to one of Claims 2 to 4, **characterized in that** the mirror arrangement (40) has a second position mirror (105), which is arranged such that the object beams (25) incident on the second position mirror (105) are directed in a fourth beam path (115) onto a fourth side (110) of the measurement object (5) to be measured, which is parallel to the third side (90).

6. Interferometric measurement apparatus (1) according to one of Claims 1 to 5, **characterized in that** the image recorder (55) is a camera with evaluation software for determining the position of the measurement object (5).

7. Interferometric measurement apparatus (1) according to one of Claims 1 to 6, **characterized in that** the measurement apparatus (1) has a correction unit for adapting the optical distance between the measurement object (5) and the image recorder (55).

8. Interferometric measurement apparatus (1) according to Claim 7, **characterized in that** the correction unit consists of at least one movement stage, piezoelement, optically active element or of the combination thereof.

## Revendications

1. Dispositif de mesure interférométrique (1) pour mesurer un objet de mesure (5), notamment pour mesurer l'épaisseur de l'objet de mesure (5), comprenant une source de lumière (10), un diviseur de faisceau (15) destiné à former des faisceaux de référence (20) et des faisceaux objets (25), un miroir de référence (30) sur le trajet de faisceau de référence (35), un objectif spécial (45) comportant un dispositif à miroir (40) sur le trajet de faisceau objet (50) et un capteur d'image (55), dans lequel le dispositif à miroir (40) comprend au moins un premier (60) et un deuxième miroirs (65) de déviation et ceux-ci sont disposés de telle sorte que, lors de l'utilisation, les faisceaux objets (25) incidents sur les premier (60) et deuxième (65) miroirs de déviation soient dirigés vers un premier (70) ou un deuxième (75) côté parallèle à celui-ci, de l'objet de mesure (5) à mesurer sur des premier (80) et deuxième trajets de faisceaux (85) antiparallèles l'un par rapport à l'autre,
**caractérisé en ce que**
le dispositif à miroir (40) comprend en outre au moins un premier miroir de position (70) pour former l'image de la position de l'objet de mesure à mesurer (5) par rapport au premier (60) et/ou deuxième miroir de déviation (65).

2. Dispositif de mesure interférométrique (1) selon la revendication 1, **caractérisé en ce que** le premier miroir de position (70) est disposé de telle sorte que les faisceaux objets (25) incidents sur le miroir de position (70) soient dirigés vers un troisième côté (90), orienté à angle droit par rapport aux premier (70) et deuxième (75) côtés, de l'objet de mesure à mesurer (5) sur un troisième trajet de faisceau (95).

3. Dispositif de mesure interférométrique (1) selon la revendication 2, **caractérisé en ce que** les trajets de faisceaux antiparallèles (80, 85) forment, avec le troisième trajet de faisceau (95), un angle (100) supérieur à 0° et inférieur à 180°.

4. Dispositif de mesure interférométrique (1) selon la revendication 3, **caractérisé en ce que** l'angle (100) est un angle droit.

5. Dispositif de mesure interférométrique (1) selon l'une quelconque des revendications 2 à 4, **caractérisé en ce que** le dispositif à miroir (40) comprend un deuxième miroir de position (105), et **en ce que** celui-ci est disposé de telle sorte que les faisceaux objets (25) incidents sur le deuxième miroir de position (105) soient dirigés vers un quatrième côté (110), parallèle au troisième côté (90), de l'objet de mesure à mesurer (5) sur un quatrième trajet de faisceau (115).

6. Dispositif de mesure interférométrique (1) selon l'une quelconque des revendications 1 à 5, **caractérisé en ce que** le capteur d'image (55) est une caméra comportant un logiciel d'évaluation pour déterminer la position de l'objet de mesure (5).

7. Dispositif de mesure interférométrique (1) selon l'une quelconque des revendications 1 à 6, **caractérisé en ce que** le dispositif de mesure (1) comporte une unité de correction pour ajuster le chemin optique entre l'objet de mesure (5) et le capteur d'image (55).

8. Dispositif de mesure interférométrique (1) selon la revendication 7, **caractérisé en ce que** l'unité de correction comprend au moins une table de positionnement, un élément piézo-électrique, un élément optiquement actif ou une combinaison de ceux-ci.
